# EUROPEAN PATENT APPLICATION

(11) **EP 4 661 487 A1**
(43) Date of publication of application: **10.12.2025**
(21) Application number: 23920029.8
(22) Date of filing: 28.12.2023
(51) Int. Cl.: H04W 28/06, H04W 72/0446, H04W 72/566, H04W 84/12

(54) **COMMUNICATION DEVICE, CONTROL METHOD, AND PROGRAM**

(30) Priority: 30.01.2023 JP 2023012278
(71) Applicant: Canon Kabushiki Kaisha, Tokyo, 146-8501 (JP)
(72) Inventor: TSUJIMARU Yuki, Tokyo 146-8501 (JP)
(74) Representative: Canon Europe Limited
(86) International application number: PCT/JP2023/047236
(87) International publication number: WO 2024/161894

(57) **Abstract**

A communication device capable of performing wireless communication based on an IEEE 802.11 standard transmits a wireless frame having a preamble of a physical layer (PHY) and a data field containing data. If a specific condition is satisfied when the communication device is transmitting the wireless frame that includes information related to data preemption in the preamble and that contains first data in the data field, the communication device interrupts transmission of the first data and preemptively transmits second data different from the first data.

## Description

### Technical Field

The present invention relates to communication devices that perform wireless communication.

### Background Art

The IEEE (Institute of Electrical and Electronics Engineers) 802.11 standard is known as a communication standard related to wireless LAN (wireless local area network). With regard to the IEEE 802.11be standard and a successor standard thereto, enhancement of communication efficiency and throughput is being considered by causing multiple access point devices (sometimes simply referred to as "APs" hereinafter) to operate in cooperation with each other.

Patent Literature 1 discloses a so-called R-TWT (restricted target wake time) technology involving providing a time period available for communication of data that requires low latency and transmitting the data that requires low latency in the aforementioned time period.

### Citation List

### Patent Literature

PTL 1: U.S. Patent Application Publication No. 2022/0070772

### Summary of Invention

### Technical Problem

The aforementioned R-TWT technology enables reduced latency when steadily-occurring data is to be transmitted in a scheduled time period.

On the other hand, the data that requires low latency may sometimes occur outside the aforementioned scheduled time period. In order to transmit such data with low latency, it is necessary to realize prioritized low-latency transmission using a technique different from the R-TWT.

The present invention has been made in view of at least one of the aforementioned problems. An object of an aspect of the present invention is to provide a mechanism for transmitting another data instead of transmitting certain data during transmission of a wireless frame used for communicating the data.

### Solution to Problem

A communication device according to an aspect of the present invention is capable of performing wireless communication based on an IEEE 802.11 standard and includes: transmitting means for transmitting a wireless frame having a preamble of a physical layer and a data field following the preamble, the data field containing data. If a specific condition is satisfied when the communication device is transmitting the wireless frame that includes information related to data preemption in the preamble and that contains first data in the data field, the transmitting means interrupts transmission of the first data and preemptively transmits second data different from the first data. Advantageous Effects of Invention

The aspect of the present invention enables transmission of another data instead of transmission of certain data during transmission of a wireless frame used for communicating the data.

### Brief Description of Drawings

[Fig. 1] Fig. 1 illustrates a configuration example of a network.
[Fig. 2] Fig. 2 illustrates a hardware configuration of a communication device.
[Fig. 3] Fig. 3 illustrates a software configuration of the communication device.
[Fig. 4] Fig. 4 illustrates an example of a wireless frame.
[Fig. 5] Fig. 5 is a schematic view illustrating preemption control according to a first embodiment.
[Fig. 6] Fig. 6 illustrates an example of control executed by an AP according to the first embodiment.
[Fig. 7] Fig. 7 illustrates an example of control executed by an STA according to the first embodiment.
[Fig. 8] Fig. 8 is a schematic view illustrating preemption control according to a second embodiment.
[Fig. 9] Fig. 9 illustrates an example of control executed by the AP according to the second embodiment.
[Fig. 10] Fig. 10 illustrates an example of control executed by the STA according to the second embodiment.
[Fig. 11A] Fig. 11A illustrates a modification of the second embodiment.
[Fig. 11B] Fig. 11B illustrates the modification of the second embodiment.
[Fig. 11C] Fig. 11C illustrates the modification of the second embodiment.

### Description of Embodiments

Embodiments will now be described below with reference to the appended drawings. The following embodiments are not intended to limit the invention according to the claims. Although the embodiments indicate multiple features, not all of these multiple features are essential for the invention, and the multiple features may be arbitrarily combined. Moreover, in the appended drawings, identical or similar components are given the same reference sign, and redundant descriptions thereof are omitted.

### <First Embodiment>

### <Configuration of Communication System>

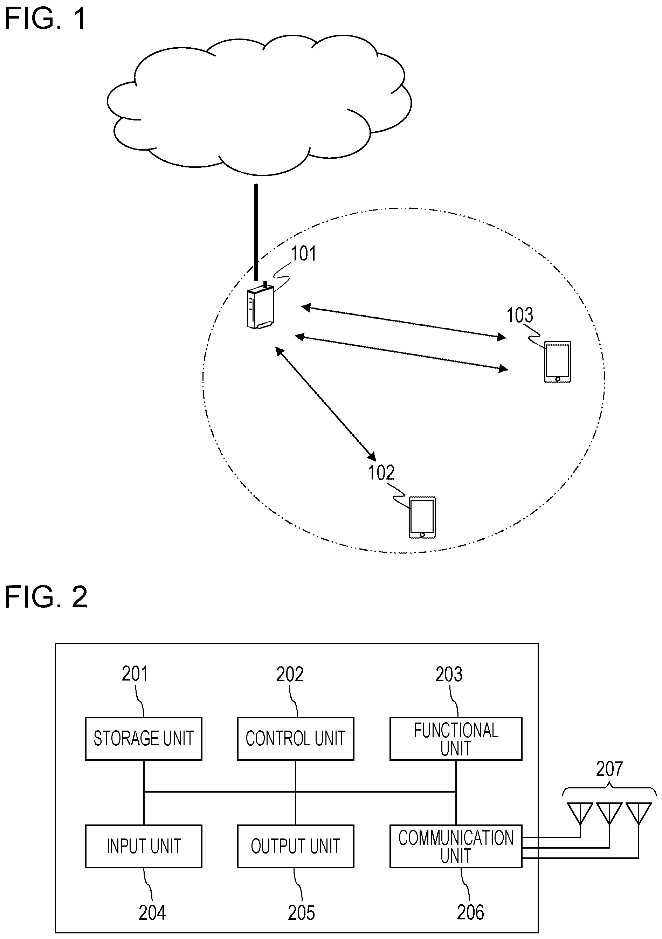

Fig. 1 illustrates a configuration example of a wireless communication system according to a first embodiment. This wireless communication system includes one access point device (simply referred to as "AP", "AP STA", or "access point" hereinafter) and two station devices (each simply referred to as "STA", "Non-AP STA", or "station" hereinafter). The AP 101 and the STAs 102 and 103 will collectively be referred to as "communication devices" hereinafter.

The AP 101 is capable of executing wireless frame communication compliant with a successor standard that targets a maximum transmission speed of 90 Gbps to beyond 100 Gbps and that is a successor to the IEEE 802.11be standard targeting a maximum transmission speed of 46.08 Gbps. The STAs 102 and 103 are similarly capable of executing wireless frame communication compliant with the successor standard to the IEEE 802.11be standard.

IEEE is an abbreviation for "Institute of Electrical and Electronics Engineers". The main features of the successor standard to the IEEE 802.11be standard include support for high-reliability communication and low-latency communication, as well as AP coordination. In view of the above, in this embodiment, the successor standard that is a successor to the IEEE 802.11be standard and that targets a maximum transmission speed of 90 Gbps to beyond 100 Gbps will also be referred to as "IEEE 802.11 UHR (ultra high reliability)". The wireless frame to be communicated based on the successor standard will also be referred to as "UHR PPDU". PPDU is an abbreviation for "PLCP Protocol Data Unit", and PLCP is an abbreviation for "Physical Layer Convergence Protocol".

The names "IEEE 802.11 UHR" and "UHR standard" are provided for the sake of convenience in view of the targets to be achieved in the successor standard and the key features of the standard, and may possibly be changed to other names when the standard has been finalized. On the other hand, it should be noted that this description and the appended claims are essentially applicable to all successor standards to the IEEE 802.11be standard.

Although Fig. 1 illustrates a wireless communication network including one AP and two STAs as an example, the numbers thereof may be larger or smaller than those illustrated. The AP 101 and the STAs 102 and 103 support the communication (transmission and reception) of the UHR PPDU, and may additionally support communication of a PPDU based on a legacy standard serving as a predecessor to the UHR standard. In detail, the AP 101 and the STAs 102 and 103 may be configured to support transmission and reception of a PPDU based on, for example, the IEEE 802.11a/b/g/n/ac/ax/be standards.

The AP 101 provides a network to each STA. Each of the STAs 102 and 103 participates in the network provided by the AP 101. Fig. 1 illustrates an example where the STAs 102 and 103 are participating in the network provided by the AP 101.

The AP 101 and the STAs 102 and 103 may be configured to support wireless communication based on another communication standard, such as Bluetooth (registered trademark), NFC, or Bluetooth (registered trademark) LE (Low Energy). NFC is an abbreviation for "Near Field Communication".

The AP 101 may also be configured to support wired communication using an Ethernet (registered trademark) cable or wired communication using an optical fiber. In this embodiment, it is assumed that the AP 101 is connected to the Internet via an Ethernet cable. Specific examples of the AP 101 and the STAs 102 and 103 include wireless LAN routers and personal computers (PCs), but are not limited thereto. The AP 101 and the STAs 102 and 103 may each be an information processing device, such as a wireless chip, supporting transmission and reception of an UHR PPDU. Specific examples of the STAs 102 and 103 include cameras, tablets, smartphones, PCs, mobile phones, video cameras, projectors, and wearable devices, such as smart glasses, but are not limited thereto.

The communication devices, such as the AP 101 and the STAs 102 and 103, can perform communication using bandwidths of 20 MHz, 40 MHz, 80 MHz, 160 MHz, 320 MHz, 480 MHz, and 640 MHz.

In recent years, the demand for low-latency communication is increasing in wireless communication. For example, the 802.11be standard is provided with an R-TWT (restricted target wake time) function for providing a time period available for communication requiring low latency to fulfill the demand for low-latency communication. This R-TWT function enables reduced latency when steadily-occurring data is to be transmitted in a scheduled time period. On the other hand, data that requires low latency may sometimes occur outside the aforementioned scheduled time period. In order to transmit such data with low latency, it is necessary to realize prioritized low-latency transmission using a technique different from the R-TWT.

This embodiment provides a mechanism that can preferentially transmit irregularly-occurring data requiring low-latency communication by transmitting low-latency data instead of transmitting certain data during transmission of a wireless frame used for communicating the data. A detailed description will be provided below.

### <Configuration of Device>

Fig. 2 illustrates an example of a hardware configuration of each of the communication devices (AP and STAs). As an example of hardware components, each communication device has a storage unit 201, a control unit 202, a functional unit 203, an input unit 204, an output unit 205, a communication unit 206, and an antenna 207. In this embodiment, the communication device is assumed to have multiple antennas, but may have a single antenna.

The storage unit 201 is constituted of both of or either of a ROM and a RAM, and has stored therein a program for performing various types of operation to be described later and various types of information, such as a communication parameter for wireless communication. RAM is an abbreviation for "Random Access Memory", and ROM is an abbreviation for "Read Only Memory". In addition to or as an alternative to a memory, such as the ROM and/or the RAM, the storage unit 201 used may be a storage medium, such as a nonvolatile storage device, which may be a hard disk or an SSD (solid state drive).

The control unit 202 includes, for example, a processor, such as a CPU or MPU, an ASIC (application-specific integrated circuit), a DSP (digital signal processor), and an FPGA (field programmable gate array). CPU is an abbreviation for "Central Processing Unit", and MPU is an abbreviation for "Micro Processing Unit". The control unit 202 executes the program stored in the storage unit 201 and controls the entire device by actuating a hardware circuit, such as the ASIC. The control unit 202 may control the entire device in accordance with cooperative operation between the program stored in the storage unit 201 and an OS (operating system).

The control unit 202 controls the functional unit 203 to execute a predetermined process, such as image capturing, printing, or projecting. The functional unit 203 is hardware used by the device for executing the predetermined process. For example, if the communication device is a camera, such as a digital still camera, or a smartphone having a camera, the functional unit 203 is an image capturing unit that performs an image capturing process for capturing a surrounding image via a camera unit (not illustrated) included in the communication device. For example, if the communication device is a printer, the functional unit 203 is a printing unit that performs a printing process on a sheet, such as paper, based on print data obtained from the outside by wireless communication. For example, if the communication device is a projector or smart glasses, the functional unit 203 is a projecting unit that performs a projecting process for projecting image data or video data obtained from the outside by wireless communication. In the case of the smart glasses, the projection surface includes the retinas of the end user. The data processed by the functional unit 203 may be data stored in the storage unit 201 or may be data obtained by communication with another AP or STA via the communication unit 206 to be described later.

The input unit 204 receives various types of operation from the user. The output unit 205 performs various types of output to the user. The output by the output unit 205 includes, for example, at least one of displaying of a screen on a display, audio output from a loudspeaker, and vibration output. Both the input unit 204 and the output unit 205 may be realized with a single module, as in a touchscreen.

The communication unit 206 performs control of wireless communication compliant with the IEEE 802.11 series, as well as control of IP communication. In this embodiment, the communication unit 206 operates in cooperation with the antenna 207 to execute transmission and reception of an UHR PPDU serving as a wireless frame based on the UHR standard or a PPDU corresponding to a standard prior thereto. For example, the antenna 207 is capable of transmitting and receiving a signal in a frequency band of at least one of a sub GHz band, 2.4 GHz band, 5 GHz band, 6 GHz band, 7 GHz band, and 60 GHz band.

If the communication device is compliant with, for example, the NFC standard and the Bluetooth standard mentioned above, the communication unit 206 may be configured to control wireless communication compliant with these communication standards.

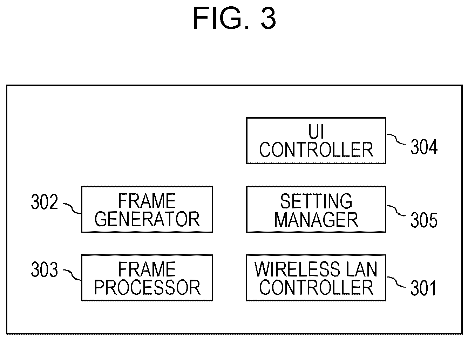

The functional configuration of each of the communication devices (AP 101 and STAs 102 and 103) will now be described with reference to Fig. 3. Fig. 3 is a block diagram illustrating the functional configuration of each communication device.

The communication device has a wireless LAN controller 301, a frame generator 302, a frame processor 303, a setting manager 305, and a UI controller 304.

Each function will be described. The wireless LAN controller 301 controls the antenna 207 and the communication unit 206 for transmitting and receiving a wireless signal to and from another communication device. In detail, the wireless LAN controller 301 operates in cooperation with the frame generator 302 and the frame processor 303 to execute communication control of a wireless frame, such as a UHR PPDU, in accordance with the IEEE 802.11 series.

Based on a command from the wireless LAN controller 301, the frame generator 302 controls the communication unit or the antenna to generate a wireless frame to be transmitted. The wireless frame is constituted of a preamble field and a data field. The data field contains MAC (medium access control) frames, such as a management frame, a control frame, and a data frame. The wireless LAN controller 301 manages multiple transmission queues provided with priority levels (not illustrated), and commands the frame generator 302 to generate a wireless frame based on the accumulation status of data in the multiple transmission queues.

The wireless frame generated by the generator 302 and including a preamble of a physical layer (PHY) and data is transmitted to the outside by the wireless LAN controller 301, the communication unit 206, and the antenna 207. The data in the wireless frame received as a result of the antenna 207, the communication unit 206, and the wireless LAN controller 301 operating in cooperation with one another is transferred to the frame processor 303. The frame processor 303 analyzes the data in the wireless frame and provides a notification to a function in a higher layer (not illustrated), and also performs a wireless-communication control process based on information obtained from the analysis. For example, if the wireless frame received from the outside contains data destined for the STA 102, the data is stored in any of the aforementioned transmission queues based on the type of the data.

The setting manager 305 manages the MCS or the operating frequency band used for communicating with another communication device, a BSSID and a BSS Color, bandwidth information used for PPDU communication, a network construction, and communication parameters required for communication with the STA. MCS is an abbreviation for "Modulation and Coding Scheme", and is information indicating a modulation and coding scheme to be used in communication. Furthermore, for example, an operation setting for determining whether or not to transmit a preemptible PPDU to be described later is also stored.

The UI controller 304 operates in cooperation with the output unit 205 to provide an operation screen to the user, operates in cooperation with the input unit 204 to detect a user operation performed on the aforementioned operation screen for, for example, changing an operation setting, and requests the setting manager 305 to change the operation setting. The UI controller 304 operates in cooperation with the output unit 205 to provide, to the user, a change screen for changing the operation setting for determining whether or not to transmit the preemptible PPDU. When detecting the user operation performed on the change screen for changing the operation setting, the UI controller 304 requests the setting manager 305 to change the operation setting. The setting manager 305 receiving the request changes the stored operation setting.

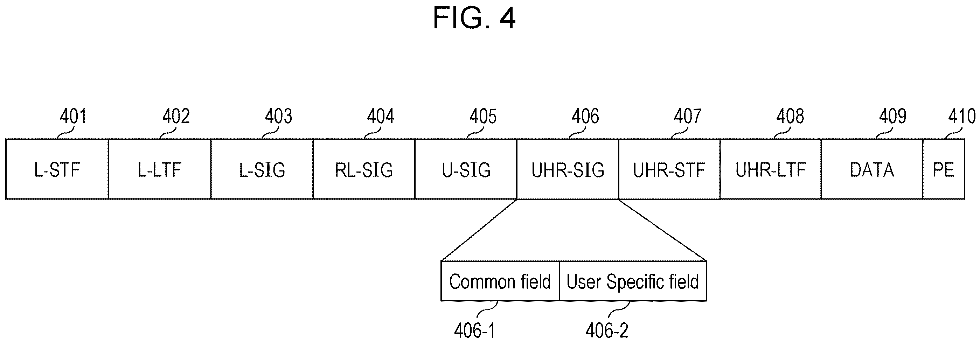

The UHR PPDU communicated by the communication device in this embodiment will now be described with reference to Fig. 4. Fig. 4 illustrates an example of a format of a UHR MU (multi-user) PPDU transmitted by the communication device.

The UHR PPDU illustrated in Fig. 4 includes an STF (short training field), an LTF (long training field), and a SIG (signal field). As illustrated in Fig. 4, the preamble of the PPDU includes fields 401 to 403 for ensuring backward compatibility with the IEEE 802.11a/b/g/n/ax standards. In detail, an L-STF (legacy short training field) 401 and an L-LTF (legacy long training field) 402 are included as training fields. Moreover, an L-SIG (legacy signal field) 403 is included as a signal field.

The L-LTF is placed immediately after the L-STF, and the L-SIG is placed immediately after the L-LTF.
Furthermore, an RL-SIG (repeated L-SIG) is placed immediately after the L-SIG. In the RL-SIG field, the content of the L-SIG is repeatedly transmitted. The RL-SIG allows a receiver to recognize that the PPDU is compliant with the IEEE 802.11ax standard and onward.

For example, the L-STF is used for detection of a wireless frame signal in the PHY layer, automatic gain control (AGC), and timing detection. For example, the L-LTF is used for high-precision frequency-time synchronization and acquisition of channel state information (CSI). The L-SIG is used for transmitting control information including information about the data transmission rate and the PHY frame length. The communication device that receives the wireless frame can use the information about the data transmission rate and the PHY frame length to ascertain the timing at which the transmission of the wireless frame is to be completed. A device that complies with the IEEE 802.11a/b/g/n/ax standards and a device that complies with the 802.11be standard or the UHR standard serving as a successor standard thereto can decode each of the aforementioned various types of legacy fields.

The PPDU further includes a U-SIG 405 (universal signal field) placed immediately after the RL-SIG. The U-SIG is a field that is planned to be used commonly in the IEEE 802.11be standard and onward and that is for transmitting control information of each standard. The U-SIG includes a field that contains a PHY version identifier and a field that contains a BSS-determination color code called a BSS color. In the case of the UHR MU PPDU, the PHY version identifier field contains a value (e.g., 1) indicating the

### UHR MU PPDU.

A UHR-SIG (ultra high reliability signal field) 406 is placed immediately after the U-SIG. The UHR-SIG includes control information not fittable in the U-SIG and control information to be provided as a notification to each user when multi-user transmission is to be performed.

A UHR-STF 407 serving as an STF for UHR and a UHR-LTF 408 serving as an LTF for UHR are placed after the UHR-SIG 406. The UHR-LTF is information to be used in, for example, MIMO estimation and beam forming estimation. Multiple UHR-LTFs may be placed based on the number of antennas for MIMO and whether or not beam forming is necessary. A maximum of eight UHR-LTFs are placed.

A data field 409 and a PE (packet extension field) 410 are placed after these control fields. The fields from the L-STF to the UHR-LTF in the PPDU in Fig. 4 are referred to as "PHY preamble".

The UHR-SIG 406 further includes a common field 406-1 and at least one user specific field 406-2. The user specific field may sometimes be simply referred to as "user field" hereinafter.

The common field 406-1 includes information indicated in Table 1 in the case of non-OFDMA or information indicated in Table 2 in the case of OFDMA. OFDMA is an abbreviation for "Orthogonal Frequency Division Multiple Access". Each of subfields, such as "Preempt Enable" and "Preempt Timing" in Table 1 and Table 2, is an example of a field including information related to data preemption.

### [Table 1]

**Table 1**

| Bit | Subfield | DESCRIPTION |
|---|---|---|
| B0-B3 | Spatial Reuse | INDICATES WHETHER SPATIAL REUSE MODE IS PERMITTED DURING TRANSMISSION OF THIS PPDU |
| B4-B5 | GI + LTF Size | INDICATES GT DURATION AND SIZE OF UHR-LTF |
| | | 0:2 × LTF + 0.8us GI |
| | | 1: 2 × LTF + 1.6us GI |
| | | 2: 4 × LTF + 0.8us GI |
| | | 3: 4 × LTF + 3.2us GI |
| B6-B8 | Number Of UHR-LTF Symbols | INDICATES NUMBER OF UHR-LTF SYMBOLS |
| | | 0: 1 UHR-LTF symbol |
| | | 1: 2 UHR-LTF symbols |
| | | 2: 4 UHR-LTF symbols |
| | | 3: 6 UHR-LTF symbols |
| | | 4: 8 UHR-LTF symbols |
| B9 | LDPC Extra Symbol Segment | INDICATES PRESENCE/ABSENCE OF LDPC EXTRA SYMBOL SEGMENT |
| | | 1: PRESENT, 0: ABSENT |
| B10-B11 | Pre-FEC Padding Factor | INDICATES PRE-FEC PADDING FACTOR |
| | | 0: Pre-FEC padding factor of 4 |
| | | 1: Pre-FEC padding factor of 1 |
| | | 2: Pre-FEC padding factor of 2 |
| | | 3: Pre-FEC padding factor of 3 |
| B12 | PE Disambiguity | INDICATES PE DISAMBIGUITY |
| B13 | Disregard | CONSTANTLY 1 |
| B14 | Preempt Enable | INDICATES WHETHER THERE IS POSSIBILITY OF PREEMPTION IN THIS PPDU |
| | | 1:True, 0:False |
| B15-B18 | Preempt Timing | INDICATES TIMING AT WHICH PREEMPTION MAY OCCUR IN THIS PPDU. |
| | | PREEMPTION MAY OCCUR AT n+1 ms INTERVAL IN CASE OF VALUE n. |
| B19-B21 | Number Of Non-OFDMA Users | INDICATES TOTAL NUMBER OF NON-OFDMA USERS. |
| | | NUMBER OF USERS INDICATES n+1 IN CASE OF VALUE n. |

Table 1 shows an example of the common field in the case of non-OFDMA. In Table 1, "Spatial Reuse" is a subfield indicating whether or not a spatial reuse mode by another communication device is permitted during transmission of this PPDU. "GI+LTF" is a subfield indicating the guard interval and the size of the LTF.

"Number of UHR-LTF Symbols" is a subfield that contains a value indicating the number of symbols in the UHR-LTF serving as a training field. "LDPC Extra Symbol Segment" is a subfield that contains information related to LDPC (low density parity check). "Pre-FEC Padding Factor" is a subfield that contains information related to a forward error correction function. "PE Disambiguity" and "Disregard" each contain information compliant with the fields of the same name in the PHY preamble of the IEEE 802.11ax standard or the IEEE 802.11be standard.

"Preempt Enable" is a subfield that contains information indicating whether there is a possibility of preemption for low-latency communication in the transmission of this PPDU. When this subfield contains "1", this implies "True" indicating that preemption may be performed. Moreover, when this subfield contains "1", this implies "False" indicating that preemption is not to be performed. The combinations of values and corresponding information are not limited to the above. The preamble of the wireless frame may include information capable of informing a counterpart device during the transmission of the wireless frame that preemptive transmission for another data may occur. A PPDU having "True" set in the "Preempt Enable" will be referred to as "Preemptible PPDU" hereinafter.

"Preempt Timing" is a subfield indicating a timing at which low-latency communication may occur in the transmission of this PPDU. This embodiment relates to a case where a value of n indicates that preemption may occur at an interval of n+1 milliseconds, but is not limited thereto. For example, by designating an exponent part, such as n-th power, of a predetermined numerical value, the interval for preemption may be instructed to a counterpart device. If the "Preempt Enable" subfield indicates "False", the "Preempt Timing" subfield has "0" set therein.

Finally, "Number of Non-OFDMA Users" is a subfield that contains information indicating the total number of users targeted for MU transmission. A subsequent encoding block contains information provided as a notification to each destination for the MU PPDU.

Next, the common field 406-1 in the case of OFDMA will be described with reference to Table 2. Since information contained in each of B0 to B18 is similar to the information contained in the case of non-OFDMA, descriptions thereof will be omitted. However, similar to the case of non-OFDMA, B14 to B18 each contain information related to low-latency communication. B19 and onward contain an "RU Allocation-A" subfield that contains information indicating an allocation status of a resource unit for OFDMA communication, as well as CRC and Tail subfields. The "RU Allocation-A" subfield contains allocation information about a resource unit corresponding to one 20 MHz sub-band or allocation information about a resource unit corresponding to two 20 MHz sub-bands depending on the bandwidth.

### [Table 2]

**Table 2**

| Bit | Subfield | DESCRIPTION |
|---|---|---|
| B0-B3 | Spatial Reuse | INDICATES WHETHER SPATIAL REUSE MODE IS PERMITTED DURING TRANSMISSION OF THIS PPDU |
| B4-B5 | GI+LTF Size | INDICATES GT DURATION AND SIZE OF UHR-LTF |
| | | 0:2 × LTF + 0.8us GI |
| | | 1: 2 × LTF + 1.6us GI |
| | | 2: 4 × LTF + 0.8us GI |
| | | 3: 4 × LTF + 3.2us GI |
| B6-B8 | Number Of UHR-LTF Symbols | INDICATES NUMBER OF UHR-LTF SYMBOLS |
| | | 0: 1 UHR-LTF symbol |
| | | 1: 2 UHR-LTF symbols |
| | | 2: 4 UHR-LTF symbols |
| | | 3: 6 UHR-LTF symbols |
| | | 4: 8 UHR-LTF symbols |
| B9 | LDPC Extra Symbol Segment | INDICATES PRESENCE/ABSENCE OF LDPC EXTRA SYMBOL SEGMENT |
| | | 1: PRESENT, 0: ABSENT |
| B10-B11 | Pre-FEC Padding Factor | INDICATES PRE-FEC PADDING FACTOR |
| | | 0: Pre-FEC padding factor of 4 |
| | | 1: Pre-FEC padding factor of 1 |
| | | 2: Pre-FEC padding factor of 2 |
| | | 3: Pre-FEC padding factor of 3 |
| B12 | PE Disambiguity | INDICATES PE DISAMBIGUITY |
| B13 | Disregard | CONSTANTLY 1 |
| B14 | Preempt Enable | INDICATES WHETHER PREEMPTION MAY BE PERFORMED IN THIS PPDU |
| | | 1: PERMITTED, 0: PROHIBITED |
| B15-B18 | Preempt Timing | INDICATES TIMING AT WHICH PREEMPTION MAY BE PERFORMED IN THIS PPDU. |
| | | PREEMPTIBLE AT n+1 ms INTERVAL IN CASE OF VALUE n. |
| B19-B18+9N | RU Allocation-A | INDICATES RU ALLOCATION. |
| | | N IS VALUE RANGING BETWEEN 1 AND 2, AND IS VARIABLE DEPENDING ON BANDWIDTH. |
| B19+9N- | CRC | INDICATES CRC. |
| B22+9N | | |
| B23+9N- | Tail | ENTER VALUE 0. |
| B28+9N | | |

The names of the subfields, the position of bits constituting each subfield, and the size thereof are not limited to those shown in Table 1 and Table 2. Subfields with different names by which similar information can be transferred to a counterpart device are possible, or the position and the size of each subfield may be changed, where appropriate. Although this embodiment relates to the example where the common field 406-1 of the UHR-SIG 406 contains the information related to low-latency communication, the embodiment is not limited to this. For example, the U-SIG 405 may contain the information related to low-latency communication.

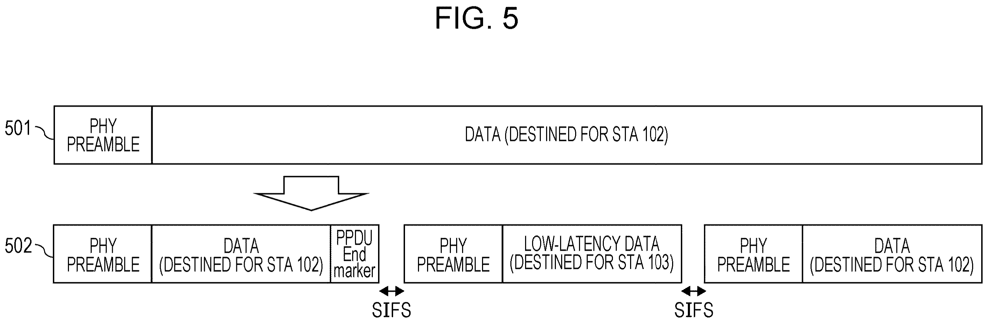

Next, preemptive communication according to this embodiment will be described with reference to Fig. 5. Fig. 5 is a schematic view illustrating the preemptive communication according to this embodiment.

The AP 101 transmits a preemptible PPDU denoted by 501 to a subordinate STA, such as the STA 102 or the STA 103. Fig. 5 illustrates an example where data destined for the STA 102 is transmitted. If data that may require low-latency communication is not contained in a transmission queue of the AP 101 during the transmission of the preemptible PPDU denoted by 501, the AP 101 completes the transmission of the preemptible PPDU without performing a preemption process. The data that may require low-latency communication is also referred to as "low-latency data".

In contrast, if the low-latency data is contained in the transmission queue of the AP 101 during the transmission of the preemptible PPDU denoted by 501, a preemptive transmission process as indicated by 502 is executed.

In detail, if the low-latency data is contained in the transmission queue of the AP 101, the AP 101 transmits a signal including a special bit sequence, called a PPDU endmarker, to inform a communication partner of an occurrence of an interruption. Subsequently, as an SIFS (short inter-frame space) time period elapses from when the transmission of the signal is completed, the AP 101 transmits the PPDU containing the low-latency data to a transmission destination for the low-latency communication. This example relates to a case where the PPDU transmitted contains low-latency data destined for the STA 103. When the transmission of the PPDU containing the low-latency data is completed, the AP 101 transmits a PPDU for transmitting interrupted remaining data, where necessary. This example relates to a case where the PPDU transmitted is for transmitting remaining data destined for the STA 102. It is arbitrary whether or not the remaining data is to be transmitted. For example, if data at a higher priority level than the remaining data is contained in the transmission queue, the transmission of the data at the higher priority level may be prioritized.

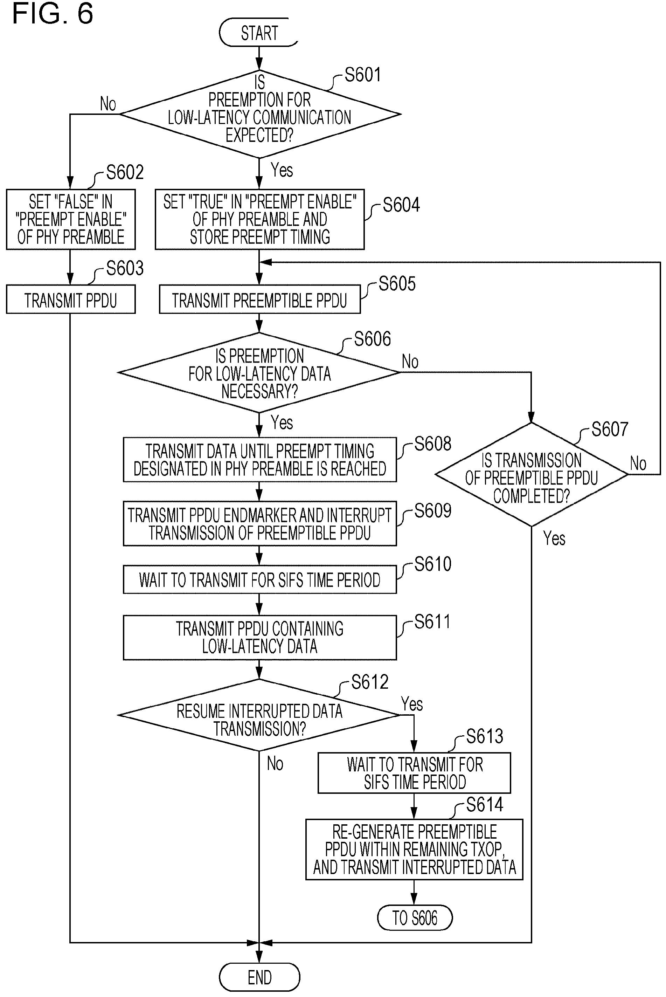

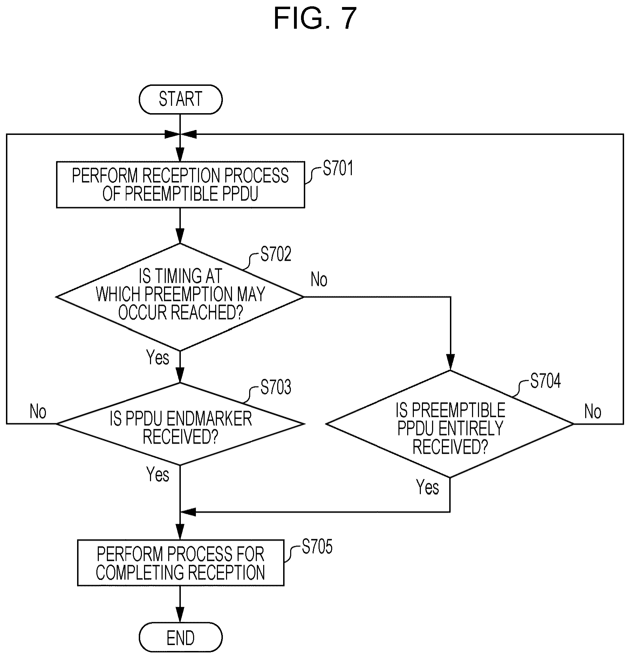

Specific control will now be described with reference to Fig. 6 and Fig. 7. Fig. 6 is a flowchart illustrating PPDU transmission control executed by the AP 101 serving as a communication device, and Fig. 7 is a flowchart illustrating preemptible-PPDU reception control executed by the STA 102 or 103 serving as a communication device. Each of the flowcharts in Fig. 6 and Fig. 7 depicts an excerpt of the series of steps for implementing preemption control using a preemptible PPDU. The steps shown in the flowchart in Fig. 6 are executed by the processor in the control unit 202 of the AP 101 executing a computer program stored in the storage unit 201. The steps shown in the flowchart in Fig. 7 are executed by the processor in the control unit 202 of the STA 102 or the STA 103 executing a computer program stored in the storage unit 201. Some of the steps, such as transmission, modulation, reception, and decoding, in each of Fig. 6 and Fig. 7 are implemented by the processor in the control unit 202 of each communication device operating in cooperation with, for example, the communication unit 206 and the ASIC, the DSP, and/or the FPGA of the control unit 202. If the subject of each step is to be clearly indicated, the functional unit described with reference to Fig. 3 will be described as the subject.

First, PPDU transmission control by the AP 101 will be described with reference to Fig. 6. Each of the steps shown in the flowchart in Fig. 6 is executed when data serving as a transmission target is contained in a transmission queue managed by the controller 301 of the AP 101 and is to be transmitted to the outside. In other words, each of the steps shown in the flowchart in Fig. 6 is executed when the AP 101 determines that a transmission opportunity (TXOP) can be acquired based on contention control based on EDCA and transmits a PPDU. EDCA is an abbreviation for "Enhanced Distributed Channel Access".

In step S601, the controller 301 determines whether preemption for low-latency communication is expected. If it is determined that preemption for low-latency communication is expected, the process proceeds to step S604. If it is determined that preemption for low-latency communication is not expected, the process proceeds to step S602. The determination can be performed based on, for example, a priority level of data communicated with each STA during a fixed time period. For example, if the AP 101 has a history of communicating an IP packet in which a DSCP value included in a DS field of the IP packet is set to an expedited forwarding value in the fixed time period, the AP 101 determines that preemption is expected. DSCP is an abbreviation for "Differentiated Services Code Point". Furthermore, if data serving as a transmission target that is about to be transmitted is high-priority-level transmission data (low-latency data) that may require low-latency communication, the controller 301 determines that preemption for low-latency communication is not expected. If this determination process indicates that the data that is about to be transmitted is low-latency data, preemptive transmission is prohibited. In other words, the AP 101 stores data with a lower priority level than the low-latency data into the preemptible PPDU. If the controller 301 operates in cooperation with the setting manager 305 to determine that an operation setting indicating that the preemptible PPDU is to not to be transmitted is an operation setting of the communication device, the controller 301 determines that preemption for low-latency communication is not expected.

By regarding the first three bits of the DS field as an IP precedence value, it may be determined that preemption is expected if there is a history where an IP packet in which the aforementioned value is "5" indicating "critical" is communicated within the fixed time period. The determination method is not limited to this. A specific terminal may be preliminarily registered in the AP as a highest-priority terminal in the communication of the AP 101, and it may be determined that preemption is expected when the specific terminal is participating in the network of the AP 101. Time-series data of communication in a past fixed time period may be input, a probability of whether low-latency data may be about to occur may be estimated, and it may be determined whether preemption is expected based on the estimated probability. For example, by inputting past communication data to learned model data that has undergone learning by using an algorithm of machine learning, such as existing supervised learning or deep learning, an inference result indicating a probability of whether low-latency data may occur can be obtained.

Subsequently, in step S602, the controller 301 operates in cooperation with the frame generator 302 to set "False" in the "Preempt Enable" subfield of the PHY preamble. In this case, "0" may be set in the "Preempt Timing" subfield. Then, the controller 301 operates in cooperation with the frame generator 302 to set information based on an appropriate transmission parameter or the like in another preamble field, and generates a UHR MU PPDU including data serving as a transmission target in the data field.

In step S603, the controller 301 transmits the UHR MU PPDU generated in step S602, and ends the series of transmission steps.

The following description relates to a case where it is determined that preemption for low-latency communication is expected. In step S604, the controller 301 operates in cooperation with the frame generator 302 to set "True" in the "Preempt Enable" subfield of the PHY preamble, and to set a predetermined value in the "Preempt Timing" subfield. Then, the controller 301 operates in cooperation with the frame generator 302 to set a value based on an appropriate transmission parameter or the like in another preamble field, and generates a preemptible PPDU including data serving as a transmission target in the data field.

In step S605, the controller 301 operates in cooperation with the communication unit 206 and the antenna 207 to start transmitting the generated preemptible PPDU. Then, in step S606, the controller 301 determines whether preemption for low-latency data is necessary. If it is determined that preemptive transmission for low-latency data is necessary, the process proceeds to step S608. If it is determined that preemptive transmission for low-latency data is not necessary, the process proceeds to step S607. In detail, if transmission data corresponding to an IP packet in which the aforementioned DSCP value is set to an expedited forwarding value is contained in a transmission queue, the controller 301 determines that preemptive transmission for low-latency data is necessary. By regarding the first three bits of the DS field as an IP precedence value, it may be determined that preemptive transmission is necessary if transmission data corresponding to an IP packet in which the relevant value indicates "critical" is contained in the transmission queue.

This embodiment relates to an example where low-latency data is determined based on QoS (Quality of Service) information in the IP packet, but is not limited thereto. For example, it may be determined that preemptive transmission is necessary when transmission data corresponding to an STA preliminarily registered as a highest-priority terminal in the AP is contained in the transmission queue. The process for determining whether preemptive transmission for low-latency data is necessary is an example of a process for determining that a specific condition is satisfied.

In step S607, the controller 301 determines whether the transmission process of the preemptible PPDU is completed. If it is determined that the transmission process of the preemptible PPDU is completed, the series of transmission control ends. In contrast, if it is determined that the transmission process of the preemptible PPDU is not completed (i.e., if it is determined that the preemptible PPDU is being transmitted), the process proceeds to step S605 to continue with the transmission process of the preemptible PPDU.

Lastly, preemption control for low-latency data will be described. In step S608, the controller 301 continues with the transmission of the data field until a time point corresponding to a preempt timing set in the PHY preamble of the preemptible PPDU is reached. Then, when the time point corresponding to the preempt timing is reached, the controller 301 causes the process to proceed to step S609.

In step S609, the controller 301 transmits, as a PPDU endmarker, data including a special bit sequence to notify a communication partner of an occurrence of an interruption, and interrupts the transmission process of the preemptible PPDU.

In step S610, the controller 301 waits to transmit for the duration of the SIFS time period. In step S6111, the controller 301 operates in cooperation with the frame generator 302 to transmit the generated PPDU containing the low-latency data toward the STA serving as a destination for the low-latency data. As mentioned above, the destination for the low-latency data may be different from the destination for the preemptible PPDU transmitted in step S605. The PPDU generating process is to be performed concurrently while the AP 101 waits for the SIFS time period. The "Preempt Enable" subfield in the preamble of the PPDU transmitted in step S610 has "False" set therein. When the transmission of the PPDU containing the low-latency data is completed, the AP 101 causes the process to proceed to step S612.

In step S612, the controller 301 determines whether the interrupted data transmission is to be resumed. If it is determined that the interrupted data transmission is to be resumed, the process proceeds to step S613. If it is determined that the interrupted data transmission is not to be resumed, the series of transmission steps ends. For example, the controller 301 determines whether the interrupted data transmission is to be resumed based on the priority level of the interrupted transmission data included in the preemptible PPDU or the remaining TXOP. In more detail, if the priority level of data contained in a new transmission queue is higher than the priority level of the interrupted transmission data or if the time period of the remaining TXOP is short, it may be determined that the interrupted data transmission is not to be resumed. If it is determined that the interrupted data transmission is not to be resumed, the interrupted remaining data is returned to the transmission queue, and is re-transmitted, as appropriate, at a timing at which the AP 101 ensures a subsequent transmission opportunity and onward.

In step S613, the controller 301 waits to transmit for the duration of the SIFS time period. In step S614, the controller 301 operates in cooperation with the frame generator 302 to re-generate a preemptible PPDU containing data within the remaining TXOP, and starts (resumes) the transmission of the remaining data interrupted in step S609. The controller 301 may re-generate a preemptible PPDU including a portion of the remaining data, or may re-generate a preemptible PPDU including all of the remaining data by increasing the MCS in the data field. The PPDU regenerating process is to be performed concurrently while the AP 101 waits for the SIFS time period.

When the transmission process is resumed, the controller 301 causes the process to proceed to step S606 to attempt transmission of the preemptible PPDU or preemption control for another low-latency data.

If the low-latency data is contained in the transmission queue as a result of the process described above, another data transmission is interrupted, so that the low-latency data can be transmitted with priority.

PPDU reception control in each of the STA 102 and the STA 103 serving as communication devices will now be described with reference to Fig. 7. Each of the steps shown in the flowchart in Fig. 7 is executed when the STA 102 or the STA 103 receives a preemptible PPDU destined for the STA 102 or the STA 103.

In step S701, the controller 301 operates in cooperation with the frame processor 303 to perform a reception process of the preemptible PPDU. In detail, the reception process involves, for example, signal demodulation and data decoding. In step S702, the controller 301 refers to a preempt timing value set in the preamble of the preemptible PPDU. Then, the controller 301 determines whether a timing at which preemption may occur is reached based on the preempt timing value and a time period elapsed from the start of the reception of the preemptible PPDU. If it is determined that the timing at which preemption may occur is reached, the process proceeds to step S703. If it is determined that the timing at which preemption may occur is not reached, the process proceeds to step S704.

In step S703, the controller 301 operates in cooperation with the frame processor 303 to determine whether a PPDU endmarker is received. If it is determined that a PPDU endmarker is received, the process proceeds to step S705. In contrast, if it is determined that a PPDU endmarker is not received, the data decoded in accordance with the reception process is treated as data serving as a reception target, and the process proceeds to step S701 to continue with the PPDU reception process.

In step S704, the controller 301 operates in cooperation with the frame processor 303 to determine whether the preemptible PPDU is entirely received. If it is determined that the preemptible PPDU is entirely received, the controller 301 causes the process to proceed to step S705. If it is determined that the preemptible PPDU is not entirely received, the controller 301 causes the process to proceed to step S701.

In step S705, the controller 301 executes a process for completing the reception of the PPDU. If the determination result in step S703 indicates "Yes", the controller 301 stops the reception process of the preemptible PPDU and subsequently executes the process for completing the reception. When the process for completing the reception is executed, the STA, such as the STA 102 or the STA 103, having completed the reception of the PPDU transitions to a state where data transmission control based on EDCA can be performed.

If the STA receives a PPDU that is not a preemptible PPDU, that is, a PPDU having "False" set in the "Preempt Enable" subfield and that is destined for the STA, the STA can receive and decode the PPDU. Therefore, the PPDU transmitted from the AP 101 in step S603 or S611 and having "False" set in the "Preempt Enable" subfield can be properly received using a known reception procedure commonly known in the IEEE 802.11 series.

As described above, a communication device, such as the STA 102 or 103, receiving a preemptible PPDU detects a PPDU endmarker to ascertain that the transmission process of the preemptible PPDU is to be interrupted. By performing control for stopping the reception process in accordance with the detection, the reception process of the preemptible PPDU can be terminated prematurely properly.

After interrupting the transmission process of the preemptible PPDU, the AP 101 can transmit a completely different PPDU that contains low-latency data to another destination. This enables preemptive transmission for low-latency data.

### <Second Embodiment>

The first embodiment described above relates to a technique for achieving preemption by interrupting transmission of a preemptible PPDU midway and performing control for preemptively transmitting another PPDU including low-latency data. A second embodiment provides a mechanism for preemptively transmitting low-latency data during transmission of one preemptible PPDU. Since the hardware configuration and the software configuration of each communication device are similar to those in the first embodiment, descriptions thereof will be omitted.

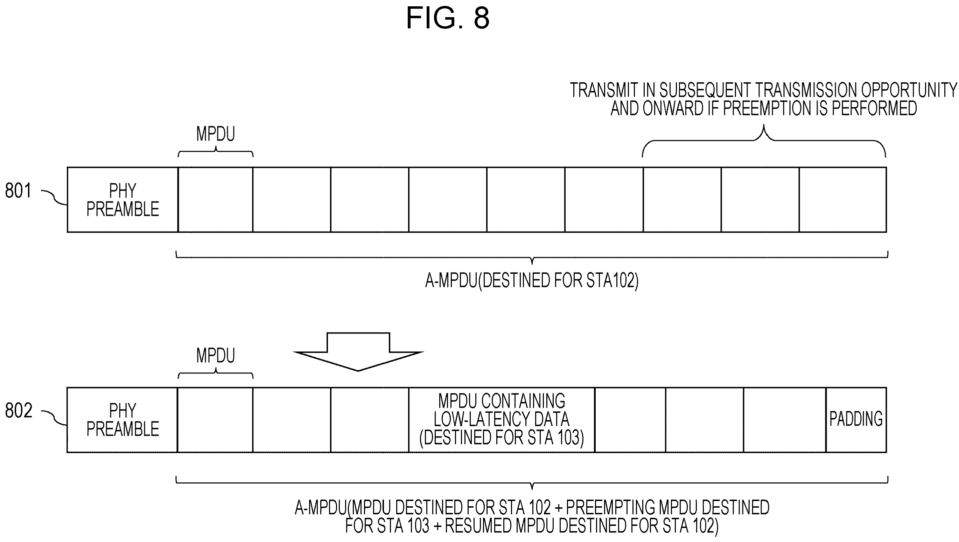

A control mechanism according to the second embodiment will now be described with reference to a schematic view in Fig. 8. As denoted by 801 in Fig. 8, in the second embodiment, a preemptible PPDU whose data field is configured in an A-MPDU format having multiple aggregated MPDUs is transmitted. MPDU is an abbreviation for "MAC Protocol Data Unit" and is a MAC frame including a MAC header and a payload. A-MPDU is an abbreviation for "Aggregation-MAC Protocol Data Unit".

If low-latency data is contained in a transmission queue during transmission of the preemptible PPDU of the A-MPDU format, preemption is performed by switching the MPDU serving as a transmission target to an MPDU corresponding to the low-latency data. 802 denotes a preemptible PPDU to be transmitted when preemption control is performed. Fig. 8 illustrates an example where an MPDU containing low-latency data destined for the STA 103 is transmitted after three MPDUs destined for the STA 102 are transmitted. Subsequently, three remaining MPDUs destined for the STA 102 are transmitted in a remaining TXOP, and padding data is transmitted in a remaining fractional time. When performing preemptive transmission as indicated by 802, the AP 101 transmits data corresponding to the three MPDUs, serving as remaining data prepared for the STA 102 but not previously transmittable, in a subsequent transmission opportunity and onward.

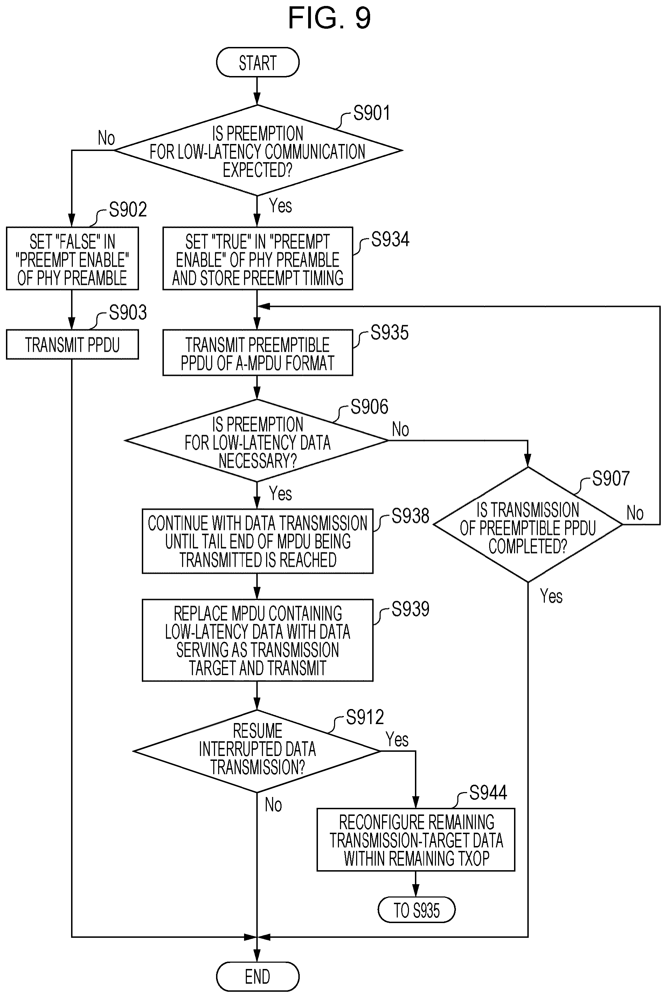

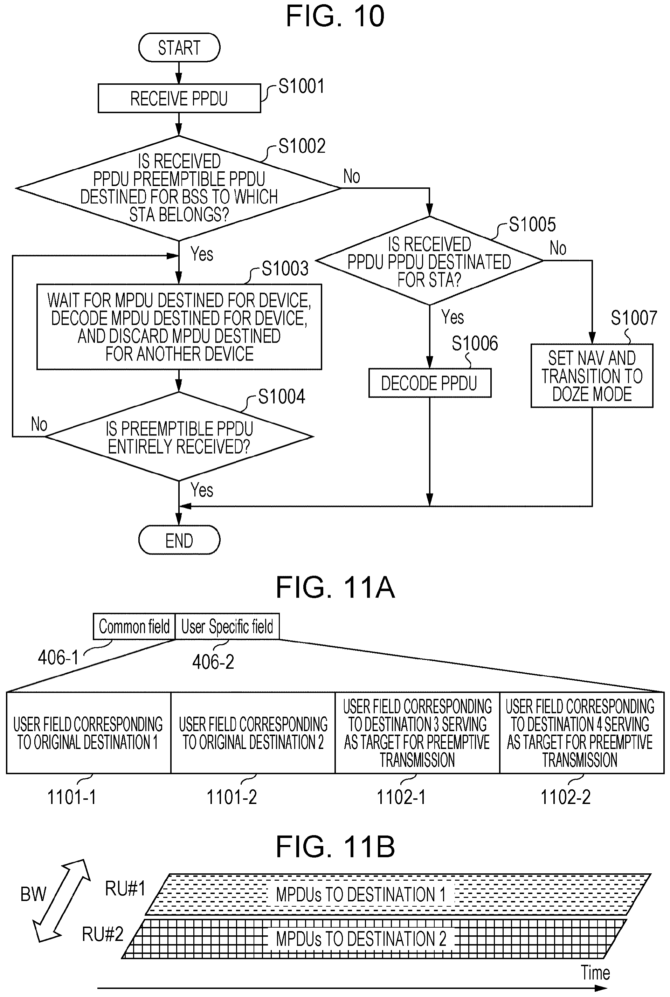

Specific control will now be described with reference to Fig. 9 and Fig. 10. Fig. 9 is a flowchart illustrating PPDU transmission control executed by the AP 101 serving as a communication device. Fig. 10 is a flowchart illustrating PPDU reception control executed by the STA 102 or 103 serving as a communication device. Each of the flowcharts in Fig. 9 and Fig. 10 depicts an excerpt of the series of steps for implementing preemption control using a preemptible PPDU. The steps shown in the flowchart in Fig. 6 are executed by the processor in the control unit 202 of the AP 101 executing a computer program stored in the storage unit 201. The steps shown in the flowchart in Fig. 10 are executed by the processor in the control unit 202 of the STA 102 or the STA 103 executing a computer program stored in the storage unit 201. Some of the steps, such as transmission, modulation, reception, and decoding, in each of Fig. 9 and Fig. 10 are implemented by the processor in the control unit 202 of each communication device operating in cooperation with, for example, the communication unit 206 and the ASIC, the DSP, and/or the FPGA of the control unit 202. If the subject of each step is to be clearly indicated, the functional unit described with reference to Fig. 3 will be described as the subject.

First, PPDU transmission control by the AP 101 will be described with reference to Fig. 9. Fig. 9 illustrates transmission control executed in place of the flowchart in Fig. 6 in the first embodiment. For the sake of convenience, a description of control similar to that in the first embodiment will be omitted, where appropriate, and differences from the first embodiment will be mainly described.

Since a determination process in step S901 and a non-preemptible-PPDU transmission process in steps S902 to S903 are respectively similar to the determination process in step S601 and the non-preemptible-PPDU transmission process in steps S601 to S603 in the first embodiment, descriptions thereof will be omitted.

In step S934, the controller 301 sets "True" in the "Preempt Enable" subfield. In contrast to the first embodiment in which a predetermined value is set in the "Preempt Timing" subfield, a predetermined value is not set as the "Preempt Timing" in this embodiment. When preemption control is to be performed with the mechanism described in the second embodiment, the UHR MU PPDU may be configured so as not to include the "Preempt Timing" subfield in the preamble.

In step S935, the controller 301 operates in cooperation with the frame generator 302 to generate a preemptible PPDU whose data section is configured in an A-MPDU format having multiple MPDUs. In this embodiment, the preemptible PPDU of the A-MPDU format generated in this step is assumed to be, for example, an A-MPDU destined for a single STA (e.g., the STA 102), as denoted by 801 in Fig. 8.

Subsequently, in step S935, the controller 301 operates in cooperation with the communication unit 206 and the antenna 207 to transmit the preemptible PPDU containing data of the A-MPDU format.

Then, in step S906, the controller 301 performs a preemption determination process similar to the process described in step S606. If it is determined that preemption is not necessary, the process proceeds to step S907. In step S907, the controller 301 determines whether the transmission of the preemptible PPDU is completed, similarly to step S607. If it is determined that the transmission of the preemptible PPDU is not completed, the transmission of the preemptible PPDU continues. If it is determined that the transmission is completed, the series of transmission control ends.

Next, a preemptive transmission process will be described. In step S938, the controller 301 continues with the data transmission until the tail end of the MPDU being transmitted is reached. When the data transmission is completed to the tail end of the MPDU, the process proceeds to step S939.

In step S939, the controller 301 operates in cooperation with the frame generator 302 to generate an MPDU containing low-latency data, replaces the data with data serving as a transmission target, and continues with the PPDU transmission. If the low-latency data is destined for an STA (e.g., the STA 103) different from the destination (e.g., the STA 102) for the A-MPDU denoted by 801, the aforementioned different destination (e.g., the STA 103) is designated as the destination at the MAC header of the MPDU. When the transmission of the MPDU containing the low-latency data is completed, the controller 301 causes the process to proceed to step S912. Step S912 is similar to step S612 in that it is determined whether the interrupted data transmission is to be resumed. If it is determined that the interrupted data transmission is not to be resumed, the series of transmission steps ends. If it is determined that the interrupted data transmission is to be resumed, the process proceeds to step S934.

In step S944, the controller 301 reconfigures remaining transmission-target data within a range that encompasses a remaining TXOP. Then, the controller 301 causes the process to proceed to step S935, and continues with the transmission process of the MPDU including the reconfigured transmission-target data. For example, the transmission of MPDUs denoted by 802 and originally planned to be transmitted within the range that encompasses the remaining TXOP is resumed. The AP 101 transmits padding data, where necessary. With the process in step S944, the transmission of data to the originally-planned destination (e.g., the STA 102) can be resumed upon completion of the preemptive transmission.

PPDU reception control in each of the STA 102 and the STA 103 serving as communication devices will now be described with reference to Fig. 10. Each of the steps shown in the flowchart in Fig. 10 is executed when the STA 102 or the STA 103 detects that a PPDU is being transmitted by another communication device.

In step S1001, the controller 301 operates in cooperation with the antenna 207, the communication unit 206, and the frame processor 303 to receive the PPDU transmitted by the other communication device. In step S1002, the controller 301 determines whether the received PPDU is a preemptible PPDU destined for the BSS to which the STA belongs. If it is determined that the received PPDU is a preemptible PPDU destined for the BSS to which the STA belongs, the process proceeds to step S1003. In contrast, if it is determined that the received PPDU is not a preemptible PPDU destined for the BSS to which the STA belongs, the process proceeds to step S1005. The determination of whether the received PPDU is a preemptible PPDU destined for the BSS to which the STA belongs can be implemented by comparing a value in the BSS color field included in the U-SIG serving as the preamble of the PPDU and a BSS color value of the BSS that is managed by the STA and to which the STA belongs. If the value in the BSS color field and the BSS color value of the BSS that is managed by the STA and to which the STA belongs match, the controller 301 determines that the received PPDU is a PPDU destined for the BSS to which the STA belongs. In contrast, if the value in the BSS color field and the BSS color value of the BSS that is managed by the STA and to which the STA belongs do not match, the controller 301 determines that the received PPDU is not a PPDU destined for the BSS to which the STA belongs. The determination of whether the received PPDU is a preemptible PPDU involves determining whether "True" is set in the "Preempt Enable" subfield included in the preamble of the PPDU. If "True" is set in the "Preempt Enable" subfield, the controller 301 determines that the received PPDU is a preemptible PPDU. If "False" is set in the "Preempt Enable" subfield, the controller 301 determines that the received PPDU is not a preemptible PPDU. Moreover, the controller 301 also determines that the received PPDU is not a preemptible PPDU if the received PPDU is, for example, an EHT PPDU, an HE PPDU, or a VHT PPDU not including the "Preempt Enable" subfield.

In the above-described determination process, the controller 301 determines that the received PPDU is a PPDU destined for the BSS to which the STA belongs, and further determines that the received PPDU is a preemptible PPDU destined for the BSS to which the STA belongs if the controller 301 determines that the received PPDU is a preemptible PPDU. If it is determined in the above-described determination process that the received PPDU is not a PPDU destined for the BSS to which the STA belongs or is not a preemptible PPDU, it is determined that the received PPDU is not a preemptible PPDU destined for the BSS to which the STA belongs. The process described in step S1002 for analyzing the preamble to determine whether the received PPDU is a preemptible PPDU destined for the BSS to which the STA belongs may be implemented by, for example, a hardware circuit, such as an ASIC or a DSP, included in the communication unit 206.

Subsequently, in step S1003, the controller 301 operates in cooperation with the frame processor 303 to wait for an MPDU destined for the device, and receives data destined for the device by decoding the MPDU destined for the device. The frame processor 303 does not decode an MPDU destined for another device and performs discard control. The determination of whether the MPDU is destined for the STA may be implemented by comparing a destination address included in the MAC header of the MPDU with the address of the STA.

In step S1004, the controller 301 determines whether the preemptible PPDU is entirely received. If it is determined that the preemptible PPDU is entirely received, the series of reception steps ends. If it is determined that the preemptible PPDU is not entirely received, the preemptible-PPDU reception process continues.

In accordance with steps S1003 and S1004, the reception process involving analyzing the data field is continuously performed while the preemptible PPDU destined for the BSS to which the STA belongs is being transmitted by another communication device. Therefore, an STA expecting that preemptive transmission is to be performed can interpret a preemptible PPDU, as appropriate, and can appropriately receive the MPDU containing the low-latency data for which preemptive transmission toward the STA is performed.

On the other hand, in step S1005, the controller 301 determines whether the received PPDU is a PPDU destined for the STA. If it is determined that the received PPDU is a PPDU destined for the STA, the process proceeds to step S1006. If it is determined that the received PPDU is not a PPDU destined for the STA, the process proceeds to step S1007. The determination may be implemented by comparing a value contained in the STAID subfield of the user specific field of the UHR-SIG serving as the preamble of the UHR MU PPDU with the STAID of the STA.

In step S1006, the controller 301 operates in cooperation with the processor 303 to acquire data destined for the STA by decoding the data included in the PPDU.

On the other hand, in step S1007, the controller 301 sets a NAV (network allocation vector) based on the data transmission rate and the PHY frame length included in the preamble of the PPDU received in step S1011. Then, during the time period in which the NAV is set, the supply of electric power to the communication unit 206 and the antenna 207 is partially or entirely stopped so that a transition to an energy-saving doze state is made, and the series of reception steps ends.

The STA that has transitioned to the doze state resumes the supply of electric power to the communication unit 206 and the antenna 207 at a timing at which the NAV-set time period elapses, and transitions to an awake state that enables data reception and data transmission.

In accordance with the series of steps described above, when the STA 102, the STA 103, or the like detects a preemptible PPDU destined for the BSS to which the STA belongs, the STA 102, the STA 103, or the like can perform control for waiting for and interpreting an MPDU destined for the STA.

### <Modification>

In the first embodiment, the preamble of a preemptible PPDU is provided with the "Preempt Timing" subfield, and a predetermined value is set in the subfield. However, the relevant subfield may be omitted. In this case, a communication device, such as the STA 102 or 103, constantly monitors whether data serving as a decoding target includes a specific bit sequence corresponding to a PPDU endmarker, and may be configured to detect the specific bit sequence corresponding to the PPDU endmarker.

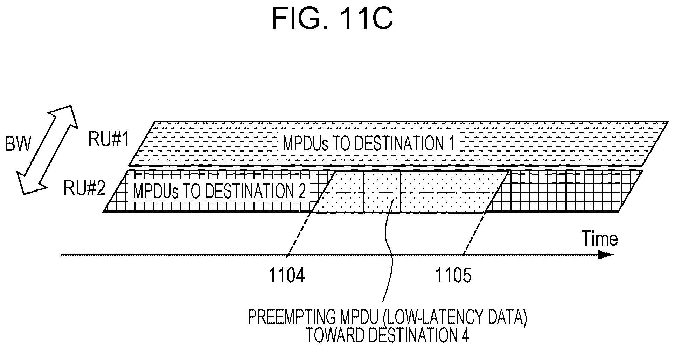

The second embodiment relates to an example where, when a preemptible PPDU destined for the BSS to which the STA belongs is detected, control for causing each STA belonging to the BSS to wait for an MPDU destined for the STA in an awake state is performed, but is not limited to this. For example, a modification where the range of the STA serving as a target that waits for the reception is further limited is possible. The modification will be described with reference to Fig. 11A to Fig. 11C. Fig. 11A illustrates a modification of a UHR-SIG transmitted by the AP 101. Fig. 11B is a schematic view illustrating a communication status when MU DL OFDMA communication is performed and preemptive transmission does not occur. Fig. 11C is a schematic view illustrating a communication status when preemptive transmission is performed with respect to a destination 4 by using a communication resource used in data transmission toward a destination 2.

When transmitting a preemptively-transmittable UHR MU PPDU, the AP 101 lists STAs where low-latency communication may possibly occur in the user specific field. In this case, the AP 101 first lists 1101-1 and 1101-2 serving as user fields destined for STAs serving as original destinations targeted for data communication. In this case, downlink DL MU OFDMA transmission to two STAs is performed by using a UHR MU PPDU. Then, the AP 101 lists user fields 1102-1 and 1102-2 corresponding to STAs where low-latency communication may possibly occur. The number of STAs where low-latency communication may possibly occur is limited to a number not exceeding the number of original destinations (the number of destinations being two in the case of Fig. 11A to Fig. 11C).

A case where preemptive transmission does not occur will now be described with reference to Fig. 11B. In this case, an STA serving as a destination 1 refers to the "RU Allocation-A" subfield to monitor "RU#1" serving as a resource unit (referred to as "RU" hereinafter) allocated to a first STA. Then, the STA serving as the destination 1 waits for an MPDU destined for the STA and transmitted at the "RU#1", and performs decoding, as appropriate.

In this case, an STA serving as the destination 2 refers to the "RU Allocation-A" subfield to monitor "#RU2" serving as an RU allocated to a second STA, waits for an MPDU destined for the STA and transmitted at the RU, and performs decoding, as appropriate.

In this case, an STA serving as a destination 3 also refers to the "RU Allocation-A" subfield to wait for an MPDU of preemptive data destined for the STA at the "RU#1" allocated to the first STA. In this case, an STA serving as the destination 4 monitors the "RU#2" allocated to the second STA and waits for an MPDU of preemptive data.

When low-latency data serving as data for the destination 3 or the destination 4 is contained in a transmission queue, the AP 101 replaces the data to be transmitted at the corresponding RU with the MPDU containing the low-latency data.

Fig. 11C illustrates preemptive transmission when low-latency data for the destination 4 is contained in the transmission queue. In this case, at a timing denoted by 1104, the AP 101 interrupts the transmission of an MPDU destined for the destination 2 at the "#RU2" monitored by both the destination 2 and the destination 4. Then, the transmission of an MPDU containing low-latency data destined for the destination 4 is performed by using the "#RU2". The STA corresponding to the destination 4 is monitoring the "RU#2", as mentioned above. Thus, the preemptively-transmitted MPDU destined for the device can be appropriately received, and the data can be decoded. At a timing denoted by 1105 at which the MPDU transmission toward the destination 4 is completed, the AP 101 resumes the transmission of remaining data toward the destination 2, as appropriate.

According to the modification described above, the range of an STA that waits for low-latency data is further limited, so that an increase in standby power occurring in the entire BSS can be suppressed, while preemptive transmission can be performed. Moreover, this modification appropriately enables preemptive transmission even in a case where simultaneous data transmission toward at least two devices is performed by using MU DL OFDMA.

### (Other Embodiments)

The present invention can also be achieved by supplying a program that implements at least one function of each of the above embodiments to a system or a device via a network or a storage medium and causing at least one processor in a computer of the system or the device to load and execute the program. The present invention can also be achieved by a circuit (e.g., an ASIC) that implements at least one function.

The invention is not limited to the above embodiments and permits various alterations and modifications so long as they do not depart from the spirit and scope of the invention. Therefore, claims for publicizing the scope of the invention will be attached.

The present invention is not limited to the above embodiments and permits various alterations and modifications so long as they do not depart from the spirit and scope of the present invention. Therefore, the following claims for publicizing the scope of the present invention will be attached.

This application claims the benefit of Japanese Patent Application No. 2023-012278 filed January 30, 2023, which is hereby incorporated by reference herein in its entirety.

### Reference Signs List

- 101: AP
- 102: STA
- 103: STA
- 202: control unit
- 206: communication unit

## Claims

1. A communication device capable of performing wireless communication based on an IEEE 802.11 standard, the communication device comprising:
transmitting means for transmitting a wireless frame having a preamble of a physical layer and a data field following the preamble, the data field containing data,
wherein if a specific condition is satisfied when the communication device is transmitting the wireless frame that includes information related to data preemption in the preamble and that contains first data in the data field, the transmitting means interrupts transmission of the first data and preemptively transmits second data different from the first data.

2. The communication device according to claim 1, wherein the preamble includes a legacy short training field, a legacy long training field, a legacy signal field, a repeated legacy signal field, a universal signal field, an ultra high reliability short training field, and an ultra high reliability long training field.

3. The communication device according to claim 2,
wherein the universal signal field in the preamble includes a subfield indicating whether or not a possibility of the data preemption exists, and
wherein the information related to the data preemption is information indicating the possibility of the data preemption, and if the communication device determines that the possibility of the data preemption exists, the communication device stores the information indicating the possibility of the data preemption in the subfield.

4. The communication device according to claim 2,
wherein the wireless frame is a UHR MU PPDU including an ultra high reliability signal field between the universal signal field and the ultra high reliability short training field in the preamble,
wherein the ultra high reliability signal field includes a common field and at least one user field, and
wherein the information related to the data preemption is information indicating a possibility of the data preemption, and if the communication device determines that the possibility of the data preemption exists, the communication device stores the information indicating the possibility of the data preemption in the common field.

5. The communication device according to any one of claims 1 to 4, wherein the preamble of the wireless frame including the information related to the data preemption of the data transmitted by the transmitting means further includes second information indicating a timing at which the data preemption is possibly performed.

6. The communication device according to any one of claims 1 to 5, further comprising resuming means for resuming transmission of remaining data for which transmission is not completed and that is included in the first data for which the transmission is interrupted, the transmission of the remaining data being resumed after the second data is preemptively transmitted.

7. The communication device according to any one of claims 1 to 6, wherein when the transmitting means is to interrupt the transmission of the first data, the transmitting means notifies a receiver who receives the wireless frame of information indicating an interruption of the transmission via the wireless frame, interrupts the transmission of the first data, and subsequently transmits a second wireless frame toward a destination different from a destination for the wireless frame, the second wireless frame including a preamble and a data field containing the second data.

8. The communication device according to any one of claims 1 to 7,
wherein the second data indicates that low-latency communication is to be performed, and the first data has a lower priority level for transmission than the second data, and
wherein if the second data is contained in a transmission queue when the transmitting means is transmitting the wireless frame containing the first data, the transmitting means interrupts the transmission of the first data and preemptively transmits the second data different from the first data.

9. A communication device capable of performing wireless communication based on an IEEE 802.11 standard, the communication device comprising:
receiving means for receiving a wireless frame including a preamble of a physical layer and a data field following the preamble, the preamble including information related to data preemption, the data field containing first data; and
stopping means for stopping a reception process of the wireless frame if information indicating that transmission of the wireless frame is to be interrupted is received before the first data of the wireless frame is completely received in accordance with the reception process by the receiving means.

10. A control method for a communication device capable of performing wireless communication based on an IEEE 802.11 standard, the control method comprising:
a transmission controlling step for transmitting a wireless frame having a preamble of a physical layer and a data field following the preamble, the data field containing data,
wherein the transmission controlling step includes interrupting transmission of first data and preemptively transmitting second data different from the first data if a specific condition is satisfied when the communication device is transmitting the wireless frame that includes information related to data preemption in the preamble and that contains the first data in the data field.

11. A control method for a communication device capable of performing wireless communication based on an IEEE 802.11 standard, the control method comprising:
a receiving step for receiving a wireless frame including a preamble of a physical layer and a data field following the preamble, the preamble including information related to data preemption, the data field containing first data; and
a stopping step for stopping a reception process of the wireless frame if information indicating that transmission of the wireless frame is to be interrupted is received before the first data of the wireless frame is completely received in accordance with the reception process in the receiving step.

12. A program causing a computer to function as the communication device according to any one of claims 1 to 9.
